Europäisches Patentamt

European Patent Office

Office européen des brevets

(19)

(11) Publication number: **0 107 362**
A2

(12) # EUROPEAN PATENT APPLICATION

(21) Application number: **83305729.2**

(22) Date of filing: **26.09.83**

(51) Int. Cl.³: **G 03 H 1/04**, G 03 H 1/22

(30) Priority: **24.09.82 GB 8227306**

(43) Date of publication of application: **02.05.84**
Bulletin 84/18

(84) Designated Contracting States: **CH FR GB IT LI**

(71) Applicant: **Rossignol, Yves Jean, 11 Rue Neuve Sainte Catherine Bat. D., F-13007 Marseille (FR)**

(72) Inventor: **Rossignol, Yves Jean, 11 Rue Neuve Sainte Catherine Bat. D., F-13007 Marseille (FR)**

(74) Representative: **Eder, Ephry, 2 Chichester Rents Chancery Lane, London WC2A 1EG (GB)**

(54) Photographic material bearing holographic images, and methods of providing and of reconstructing holographic images.

(57) A method of providing a holographic image of an object in the form of an interference pattern upon a sheet of photographic material, characterised in that said sheet extends arcuately about an axis, at least part of said object is disposed within the sector defined by said arcuate sheet, and a single divergent beam of light is directed substantially longitudinally of the said axis to illuminate simultaneously both said arcuate sheet and said part of the object.

"IMPROVEMENTS IN OR RELATING TO HOLOGRAPHY.

This invention relates to holography, and in particular to a method of forming a holographic image by illuminating a sheet of photographic material, and to photographic material in sheet form bearing a holographic image.

Conventionally, a holographic image of an object (e.g. an article) is constituted by an interference pattern in or on a flat, planar, sheet of photographic material (e.g. a film or glass plate). It is usually produced by directing two separate and distinctive beams of coherent light respectively onto the said object (the object beam) and onto the said sheet (the reference beam), these two coherent beams emanating, via a beam-splitter, from a common source, (e.g. a laser). The sheet of photographic material thus exposed maybe developed photographically thereby to provide a permanent record of the interference pattern initially created. This record may then itself be used to provide a new "object" which, when illuminated by similarly angled object and reference beams will form a virtual holographic image representing the original object in three dimensions. In some circumstances this "re-creation" or "reconstruction" can be achieved by using only a similarly angled reference beam.

Unfortunately the angular field of view, over which a virtual holographic image may be seen, is limited. To widen this field of view up to 360°, so-called multiplex holograms have been devised in which the flat, planar sheet of photographic material bears many, e.g. a thousand, holographic images in the form of interference patterns, each such image being compressed to occupy a horizontally narrow, vertical band and being representative of the object when seen in a specific direction associated with that one image. When the original object is "re-created", i.e. a virtual holographic image thereof is formed by appropriate illumination of the flat sheet of photographic material, a veritable horizontal relief effect is obtained but no, or almost no, relief effect in the vertical plane is obtained. This is especially the case where, as is common for multiplex holograms, the initial holographic image of interference patterns is taken indirectly e.g. from conventional film or slide photographs of the object or article rather than from the object or article direct.

Accordingly it is desirable to provide a method of forming holographic images whereby such images can be more truly representational of the initial object over a wider field of view than has heretofore been possible with multiplex holograms.

From the foregoing it will be apparent that, as used herein and unless the context otherwise implies, the expression "holographic image" generally includes in its meaning both a holographic image constituted by an interference pattern "record" in or on the photographic sheet, and a virtual image "re-creation" of the original object that is produced by appropriate illumination of the photographic sheet bearing the interference pattern "record".

In each such case, the method of forming the holographic image can be performed in two ways. In the first arrangement the part of the object beam that is reflected off the object onto the photographic sheet is directed towards the same side of the sheet as the other, quite separate, reference, beam. This arrangement is the most usual and is known as the "transmission" or "normally illuminated" holographic method. For "re-creation" of the original object from a "transmission" hologram, the developed sheet of photographic material is illuminated by just a single, similarly directed, reference beam of coherent light. In the second arrangement, the sheet is of a transparent photographic material and the object beam part that is reflected off the object onto the sheet is directed towards the side of the sheet opposite that towards which the other, reference, beam is directed. This arrangement is known as the "reflection" holographic method (sometimes as the "white light" holographic method) and has the advantage that for "re-creation" of the original object, the developed sheet is illuminated by just a single, similarly directed, reference beam of incoherent or "white" light, e.g. from a

- 4 -

0107362

conventional light source.

According to a first aspect of this invention ther is provided a method of providing a holographic image of an object in the form of an interference pattern upon a sheet of photographic material, **characterised in that** said sheet extends arcuately about an axis, at least part of said object is disposed within the sector defined by said arcuate sheet, and a single divergent beam of light is directed substantially longitudinally of the said axis to illuminate simultaneously both said arcuate sheet and said part of the object.

According to a second aspect, this invention envisages a method of reconstructing a holographic image in the form of a spatial image from a sheet of photographic material bearing an interference pattern, **characterised in that,** said sheet is disposed to extend arcuately about an axis and is illuminated by a divergent beam directed generally longitudinally of the axis such as to be incident both on said arcuate sheet and on the sector defined by said arcuate sheet, and such that the sector is the location for said spatial image.

Conveniently, according to either said first or second aspect of this invention, the angular extent of the sheet is at least 180° approximately, preferably substantially 360°.

According to a third aspect of this invention there is provided a sheet of photographic material bearing an interference pattern constituting a holographic image formed or produced by a method according to said first aspect of this invention.

Advantageously said sheet may be in a flat planar form produced by flattening or unbending said arcuately extending sheet following image formation. This flat planar form is convenient for filing and storage of the "record" but, of course, the arcuately extending form has to be re-consituted in order to provide for "re-creation" of the object as a virtual holographic image upon appropriate

0107362

illumination of the arcuately extending photographic sheet.

By way of a non-limiting example, embodiments of this invention will now be described with reference to the accompanying drawings of which

Figure 1 is a schematic perspective view of apparatus used in a "transmission" holographic method of the prior art,

Figure 2 is a schematic perspective view of apparatus used in a "reflection" or "white light" holographic method of the prior art,

Figure 3 is a schematic perspective view of apparatus for use in a "transmission" holographic method according to this invention,

Figure 4 is an enlarged view of part of Figure 3, and

Figure 5 is an enlarged schematic sectional view through part of apparatus for use in a "reflection" or "white light" holographic method according to this invention.

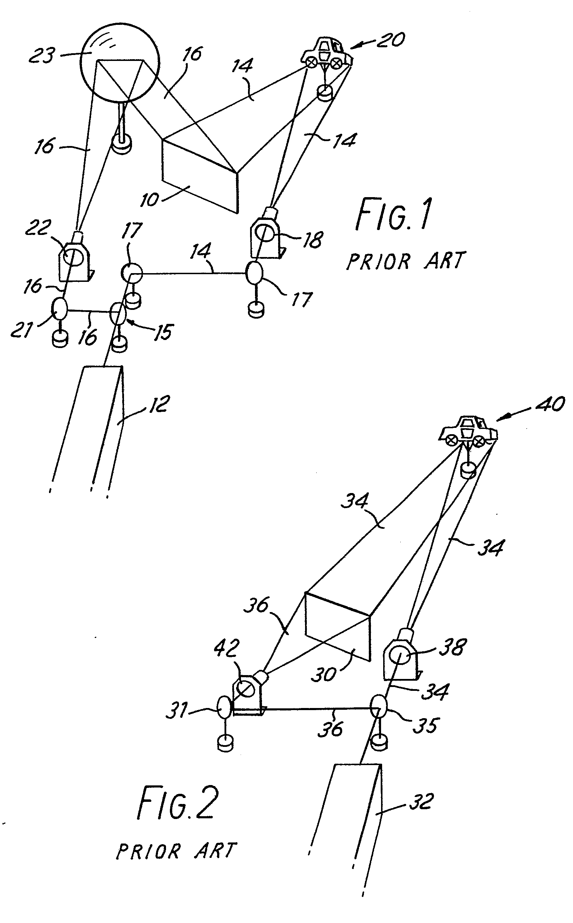

Figure 1 illustrates the prior art method of producing a "transmission" holographic image in the form of an interference pattern upon a flat planer sheet 10 of photographic material. As shown, a laser 12 or other source of coherent light emits a single beam which is split into two separate beam 14,16 by a so-called beam-splitter 15. From the beam-splitter 15, one beam 14 (called the "object" beam) is reflected by one or more mirrors 17 to pass through a lens 18 and impinge as a divergent beam upon the object or article 20 of which the hologram is to be formed. From the beam-splitter 15, the other beam 16 is reflected by one or more mirrors 21 to pass through a lens 22 and be further reflected by one or more mirrors 23 onto the side of photographic sheet 10 that faces the object 20. Thus, in this "transmission" arrangement, the reference beam 16 and the object beam 14 as reflected off the article 20 are both incident on the same side of photographic sheet 10.

Figure 2 illustrates the prior art method of producing a "reflection" holographic image in the form of an interference pattern upon a translucent or transparent, flat, planar sheet 30 of photographic material. As shown, a laser 32 or other source of coherent light, emits a single beam which is split into two separate and distinct beams 34, 36 by a so-called beam-splitter 35. From beam-splitter 35, one beam 34 (called the "object" beam) passes through a lens 38 and impinges as a divergent beam upon the object or article 40 of which the hologram is to be formed. From the beam-splitter 35, the other beam 36 (called the "reference" beam) is reflected by one or more mirrors 31 to pass through a lens 42 and impinge as a divergent beam onto the opposite surface of sheet 30 to that which faces the object 40. Thus, in this "relection" arrangement, the reference beam 36 and the object beam 34 as reflected off the article 40 are incident on the two opposite sides or surfaces of photographic sheet 30.

After photographic development of sheet 10 or 30, the latter can be illuminated by a single beam of light directed thereon in the same direction as the initial coherent reference beams 16 or 36 such as to produce from the sheet's interference pattern either a virtual or a real holographic image in space representing, in three dimensions, the original article 20 or 40, i.e. such as to re-create" the original article. To effect such "re-creation" where the interference pattern on sheet 10 was produced by the "transmission" holographic method of Figure 1 the "re-creating" beam must be coherent light. In contrast, to effect such "re-creation" where the interference pattern on sheet 30 was produced by the "reflection" holographic method of Fig 2, the "re-creating" beam may be of non-coherent "white light".

With either the Fig 1 or Fig 2 prior art method, a multiplex hologram can be formed by replacing the solid article 20 or 40 by a sequence of film or slide photographs all taken of the article from a multiplicity of successive viewpoints equiangularly spaced through 360° around a vertical axis. The two beams 14,16 or 34,36 are compressed in the horizontal dimension so as to provide for each film frame or slide photograph a holographic image that occupies an associated, horizontally thin, vertically upstanding, "sliver" or band of the flat sheet's surface. After photographic development, the flat planar sheet 10 or 30 can be illuminated by a beam which is (akin to) that originally forming the multiplex hologram of interference patterns on the sheet thereby to produce a holographic image in space "re-creating" the manifold film frames or slide photographs which were initially taken. This spatial image is visible over a wide angle, e.g. up to 360° but has a poor defintion or poor clarity (multiple vertical lines are invariably seen) and it is almost impossible to perceive a relief effect in the vertical plane.

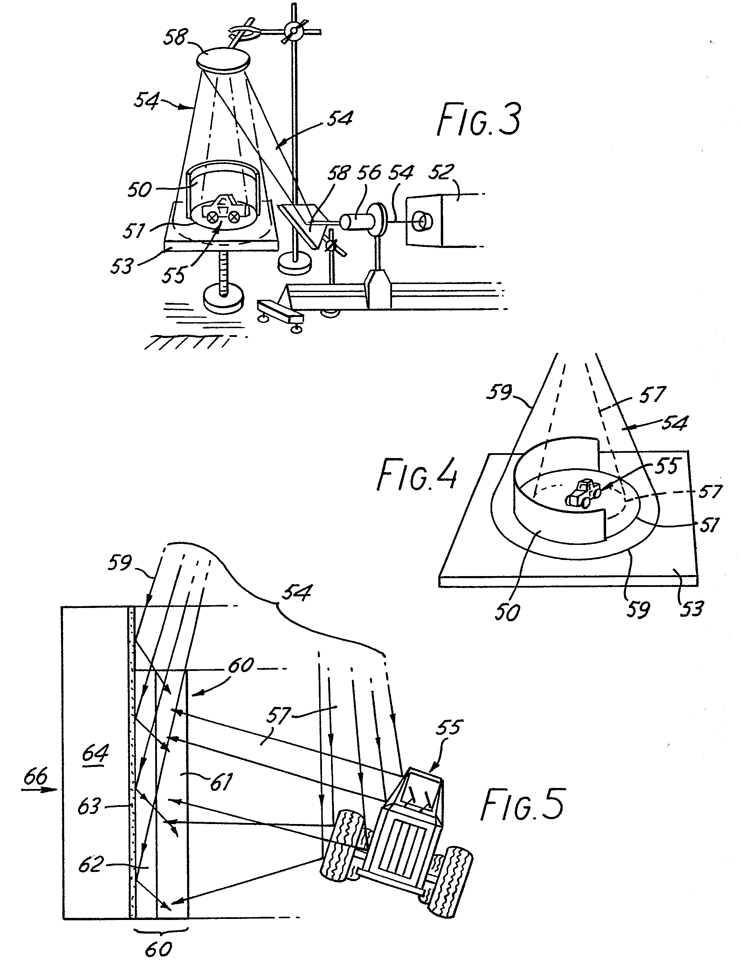

In contrast, and in accordance with a first embodiment of this invention, a method of forming a "transmission" holographic image is shown in Figure 3. In this method a photographic sheet 50 is curved about a vertical axis so as to extend arcuately, e.g. over 180° as shown, around an object 55. The photographic sheet is located in position by its bottom edge engaging in a circular groove 51 in a horizontal base plate 53. The latter is vertically adjustable by screw means from a massive bench isolated from high frequency vibrations. The laser 52, e.g. a helium-neon laser, or other source of coherent light (e.g. a sodium vapour lamp) emits a single beam 54, which is not split (there is no beam-splitter) but rather after passing through a lens 56 (e.g. a Leitz x 25/0.50) is reflected by one or more mirrors 58 to form a divergent beam directed downwardly, generally longitudinally of the axis of curvature of sheet 50, simultaneously onto both the object 55 and the concave surface of curved sheets 50. By appropriate adjustment of mirrors 58, the ratio of the inner cone-like "object portion" 57 of the single beam 54 to the outer annular ring-like "reference portion" 59 of the single beam 54 can be varied. Preferably the reference beam portion 59 is 4 times brighter than the part of the object beam portion 57 that is deflected or reflected from off the object 55 and impinges onto the sheet 50. To ensure that the whole of curved sheet 50 will be exposed and with the appropriate intensity (ratio) of illumination, a "test exposure" is made using a paper "template" in place of sheet 50. To provide for maximum illumination of the object 55, the central cone-like object portion of the divergent beam is directed downwardly towards the "centre" of the object 55.

Where the laser 52 has sufficient power to provide the above-specified illumination ratio all round, the circular groove 51 may retain in position and locate a single sheet 50 of photographic material extending arcuately through 360°. Where the laser 52 does not have sufficient power to achieve this, two like sheets 50 can be used, to cover two opposite 180° arcuate portions. In the latter case, one 180° sheet 50 is exposed, the beam 54, if necessary, being directed at a small angle to the vertical axis, and then the opposite 180° sheet 50 is exposed with the beam 54 correspondingly angled off-axis in the opposite sense, if necessary. Whether one, 360° sheet is exposed or two, 180° sheets are exposed, the 360° effect upon "re-creation" using a single, substantially axially directed, divergent beam such as 54 is unaffected.

Figure 5 illustrates an embodiment of this invention to produce a "reflection" holographic image in the form of an interference pattern in an arcuately curved sheet 60 of translucent photographic material. In this case, as shown, the part of object beam portion 57 deflected or reflected from the object 55 impinges onto the emulsion-coated concave surface 61 of sheet 60. However, parts of the reference beam portion 59 also enter emulsion coating 61 from its convex side by transmission downwardly through the gelatine layer 62 of sheet 60, these parts of the beam portion being reflected by a half-silvered mirror provided by layer 63 on a rigid annular glass block 64 providing a backing for sheet 60. In addition, further "reference" illumination of the convex side of translucent sheet 60 is derived from another source of coherent light (not shown) directing its illumination radially (as signified by arrow 66) all around the sheet 60, e.g. as by an annular laser beam source or by appropriate reflections of a linear beam source, this further "reference" illumination passing through half-silvered glass block mirror 63, 64.

After exposure of the curved photographic sheet(s) 50 or 60 and removal thereof from circular groove 51, the or each sheet is developed, (e.g. in Kodak (Registered Trade Mark) developer 17-76 for approximately 4½ minutes), immersed in fixing solution (e.g. for 2 minutes), rinsed in water and dipped in methylated spirits (e.g. for approximately 30 seconds). When fully dried, the single 360° sheet, or the two 180° sheets appropriately joined up to form one 360° sheet, can be located on a rotatable platform (e.g. in a circular groove equivalent to groove 51) and illuminated in a manner comparable to that initially producing the holographic image of interference patterns on sheet(s) 50 or 60. This "re-creating" illumination comprises a single divergent, generally axial beam such as 54. In the case of a "reflection" hologram sheet 60, the axial beam may comprise just the peripheral part 59 and, in addition, an annular beam in the direction 66 (which, for such "re-creation", may be of non-coherent "white" light). The "re-created" virtual holographic image of the original object 55 which is thus produced has a high definition (without a multitude of parallel vertical lines) and shows excellent relief in both horizontal and vertical planes.

As the platform and arcuate sheet are together rotated at an appropriate rate about the vertical axis of sheet 50 or 60, a rotating vertical holographic image of the original object 55 is "re-created" within the sector defined by the angular extent of the sheet 50 or 60, i.e. intersecting the axis of curvature of the sheet.

It is envisaged that by application of the above - described exemplary methods, a readily viewable cinematographic effect can be created involving moving, three-dimensional "pictures" produced as virtual holographic images rather than as real, two-dimensional images upon a screen.

It will be appreciated that the object 55 (and its holographic "re-creation") need not be disposed horizontally alongside sheet 50 or 60, i.e. within the sector defined by arcuately extending sheet 50 or 60, but can be above or below the level of the sheet 50 or 60 (as long as it is generally along the central axis thereof).

It will also be appreciated that, instead of rotating the object 55 or the hologram therof formed on sheet(s) 50 or 60, and viewing the rotating virtual image produced by the latter from a fixed position, a sufficient illumination intensity would allow for the arcuately curved sheet(s) 50 or 60 to be held stationary and the viewer to move around the stationary real or virtual holographic image in space.

It will be further appreciated that the curved photographic sheets may be stored and/or transported in flattened condition and only rendered arcuate when the method according to this invention is to be employed.

- 1 -

0107362

1. A method of providing a holographic image of an object in the form of an interference pattern upon a sheet of photographic material, **characterised in that** said sheet extends arcuately about an axis, at least part of said object is disposed within the sector defined by said arcuate sheet, and a single divergent beam of light is directed substantially longitudinally of the said axis to illuminate simultaneously both said arcuate sheet and said part of the object.

2. A method according to Claim 1, wherein said beam comprises coherent light.

3. A sheet of photographic material bearing an interference pattern constituting a holographic image formed or produced by a method according to either preceding Claim.

4. A method of reconstructing a holographic image in the form of a spatial image from a sheet of photographic material bearing an interference pattern, **characterised in that,** said sheet is disposed to extend arcuately about an axis and is illuminated by a divergent beam directed generally longitudinally of the axis such as to be incident both on said arcuate sheet and on the sector defined by said arcuate sheet, and such that the sector is the location for said spatial image.

0107362

5.  A method according to Claim 4, characterised in that said illumination is solely coherent.

6.  A method according to Claim 4, characterised in that said illumination includes non-coherent "white" light.

7.  A method according to any one of Claims 4 to 6 characterised in that said sheet is according to Claim 3.

8.  A method according to any one of Claims 1, 2, 4 - 7, preceding Claim, characterised in that the angular extent of the sheet is at least 180° approximately.

9.  A method according to any one of Claims 1, 2, 4 - 8, characterised in that the angular extent of the sheet is substantially 360°.

1/2

0107362

*FIG.1*
PRIOR ART

*FIG.2*
PRIOR ART

0107362

FIG.3

FIG.4

FIG.5